# EUROPÄISCHE PATENTSCHRIFT

(11) **EP 4 438 995 B1**
(45) Veröffentlichungstag und Bekanntmachung des Hinweises auf die Patenterteilung: **06.08.2025**
(21) Anmeldenummer: 24162767.8
(22) Anmeldetag: 11.03.2024
(51) Int. Cl.: F41A 27/18, F41H 7/02, F41H 7/04, B60R 21/13

(54) **GESCHÜTZTES FAHRZEUG**
PROTECTED VEHICLE
VÉHICULE PROTÉGÉ

(30) Priorität: 30.03.2023 DE 102023108244
(43) Veröffentlichungstag der Anmeldung: 02.10.2024
(73) Patentinhaber: Rheinmetall Landsysteme GmbH, 29345 Südheide (DE)
(72) Erfinder: SEEGER, Martin, 34117 Kassel (DE); BLÄßING, Tobias, 34314 Hohenkirchen/Espenau (DE); URBAN, Alexej, 8050 Zürich (CH); GERLACH, Klaus-Peter, 34212 Melsungen (DE); BECKMANN, Armin, 34621 Frielendorf (DE)
(74) Vertreter: HKW Intellectual Property PartG mbB

(56) Entgegenhaltungen:
- DE-A1- 19 843 163
- US-A1- 2014 140 796
- US-A1- 2016 001 731
- US-B2- 7 413 247

## Beschreibung

Die vorliegende Erfindung betrifft ein geschütztes Fahrzeug mit einem Überrollschutzsystem.

Geschützte Fahrzeuge, wie beispielsweise Schützenpanzer, weisen gemäß betriebsinternen Erkenntnissen oftmals eine unübersichtliche Fahrzeuggeometrie auf. Dies kann es erforderlich machen, dass einzelne Besatzungsmitglieder über Luke fahren. Dies kann stehend oder sitzend erfolgen. "Über Luke" heißt dabei, dass der Oberkörper oder zumindest der Kopf des jeweiligen Besatzungsmitglieds aus einer Lukenöffnung des geschützten Fahrzeugs in eine Umgebung des geschützten Fahrzeugs hineinragt. Dies kann zum Beispiel für die Unterstützung des Fahrers durch den Kommandanten oder für eine bessere Führbarkeit des geschützten Fahrzeugs im zivilen Straßenverkehr erforderlich sein. Dieser Umstand kann dazu führen, dass im Falle eines Überschlags des geschützten Fahrzeugs das über Luke fahrende Besatzungsmitglied tödlichen Gefahren ausgesetzt ist. Im schlimmsten Fall kann es dazu kommen, dass das Besatzungsmitglied durch das sich überschlagende geschützte Fahrzeug zerquetscht und somit tödlich verletzt wird.

Die US 2007/0273192 A1 zeigt ein Insassenrückzugssystem, das einen teilweise exponierten Insassen in ein Fahrzeug zurückzieht. Das Insassenrückzugssystem reagiert auf einen Auslöser, wobei sich eine Insassenstütze zurückzieht und den Insassen aktiv in den Innenraum des Fahrzeugs zieht.

Die US 2016/0001731 A1 beschreibt ein Turm-Airbag-System, das eine Vielzahl von Airbags enthält, die innerhalb eines Turms angeordnet sind, um einen Insassen des Turms vor Verletzungen und/oder einem Herausschleudern aus dem Turm zu schützen.

Die US 2014/0140796 A1 zeigt ein Hebesystem zum Heben einer Person in ein Baufahrzeug zur Bedienung desselben, mit einem rollstuhlgerechten Sitz, der von einem Rollstuhl abnehmbar ist.

Die DE 198 43 163 A1 beschreibt ein Verfahren zum Erfassen und Melden eines Zustands drohender Umkippgefahr bei einem geländegängigen Fahrzeug, insbesondere einem Kampffahrzeug.

Vor diesem Hintergrund besteht eine Aufgabe der vorliegenden Erfindung darin, ein verbessertes Überrollschutzsystem für ein geschütztes Fahrzeug zur Verfügung zu stellen. Diese Aufgabe wird durch ein geschütztes Fahrzeug mit zumindest einem Überrollschutzsystem nach Anspruch 1 gelöst.

Demgemäß wird ein geschütztes Fahrzeug mit einem Überrollschutzsystem vorgeschlagen. Das Überrollschutzsystem umfasst einen Turm, der eine Bewaffnung trägt, eine Sensorik, die dazu eingerichtet ist, eine Verkippung des geschützten Fahrzeugs um zumindest eine Raumrichtung zu erfassen, und eine Regel- und Steuereinheit, die dazu eingerichtet ist, den Turm basierend auf Sensorsignalen der Sensorik unmittelbar vor oder bei einem Überschlag des geschützten Fahrzeugs von einem Ausgangszustand in einen Schutzzustand zu verbringen, wobei der Turm dazu eingerichtet ist, sich in dem Schutzzustand auf einem Untergrund, auf dem sich das geschützte Fahrzeug fortbewegt, abzustützen, so dass ein Besatzungsmitglied, das sich teilweise innerhalb und teilweise außerhalb des geschützten Fahrzeugs aufhält, während des Überschlags des geschützten Fahrzeugs geschützt ist.

Dadurch, dass sich der Turm in dem Schutzzustand auf dem Untergrund abstützt, fungiert dieser als Schutz für das Besatzungsmitglied während eines Überschlags des geschützten Fahrzeugs. Verletzungen des Besatzungsmitglieds bei einem Überschlag des geschützten Fahrzeugs werden hierdurch zuverlässig verhindert.

Unter einem "Überrollschutzsystem" ist vorliegend demgemäß bevorzugt kein System zu verstehen, welches ein Überrollen oder einen Überschlag des geschützten Fahrzeugs an sich verhindert, sondern ein System, welches mögliche negative Folgen eines Überschlags des geschützten Fahrzeugs für das Besatzungsmitglied verhindert oder zumindest reduziert. Das Überrollschutzsystem kann auch als Überrollschutzvorrichtung bezeichnet werden. Das Überrollschutzsystem kann bevorzugt an geschützten Fahrzeugen, die ab Werk noch kein derartiges Überrollschutzsystem aufweisen, nachgerüstet werden. Das Überrollschutzsystem ist demgemäß nachrüstbar. Das Überrollschutzsystem ist bevorzugt modular aufgebaut. Das heißt insbesondere, dass das Überrollschutzsystem als Nachrüstmodul an dem geschützten Fahrzeug angebracht werden kann. Alternativ kann das geschützte Fahrzeug auch ab Werk mit einem derartigen Überrollschutzsystem ausgerüstet werden. Das Überrollschutzsystem kann dadurch, dass sich der Turm auf dem Untergrund abstützt, jedoch auch einen Überschlag des geschützten Fahrzeugs ganz verhindern oder zumindest verzögern. Demgemäß ist es vorliegend nicht ausgeschlossen, dass das Überrollschutzsystem einen Überschlag des geschützten Fahrzeugs verhindert.

Darunter, dass das Fahrzeug "geschützt" ist, ist vorliegend insbesondere zu verstehen, dass das geschützte Fahrzeug gegen Beschuss, Sprengfallen, unkonventionelle Spreng- oder Brandvorrichtungen (USBV, Engl.: Improvised Explosive Devices, IED), Minen oder dergleichen geschützt ist. Hierzu kann das geschützte Fahrzeug gepanzert sein. Das geschützte Fahrzeug kann ein Kettenfahrzeug oder ein Radfahrzeug sein. Nachfolgend wird davon ausgegangen, dass das geschützte Fahrzeug ein Radfahrzeug ist. Das geschützte Fahrzeug kann mehrere Radachsen aufweisen, an denen Räder vorgesehen sind. Beispielsweise sind vier Radachsen mit acht Rädern vorgesehen. Es können jedoch auch weniger oder mehr als vier Radachsen vorgesehen sein.

Das geschützte Fahrzeug weist vorzugsweise eine geschützte Fahrzeugzelle auf. Die geschützte Fahrzeugzelle kann insbesondere ein austauschbares Missionsmodul des geschützten Fahrzeugs sein. Ein Beispiel für ein derartiges Missionsmodul ist ein Sanitätsmodul. Das geschützte Fahrzeug, insbesondere die geschützte Fahrzeugzelle, weist beispielsweise eine geneigte Vorderwand und ein Dach auf.

An dem geschützten Fahrzeug oder an der geschützten Fahrzeugzelle können eine oder mehrere Lukenöffnungen vorgesehen sein. Das Überrollschutzsystem dient dem Schutz einer oder mehrerer der Lukenöffnungen. Ferner kann jede Lukenöffnung mit Hilfe eines beweglichen, insbesondere verschiebbaren oder verschwenkbaren, Lukendeckels geöffnet und geschlossen werden. Die Lukenöffnung oder die Lukenöffnungen können an einer Wandung des geschützten Fahrzeugs oder der geschützten Fahrzeugzelle vorgesehen werden. Die Wandung kann Teil des vorgenannten Dachs oder der vorgenannten Vorderwand sein.

Dass sich das Besatzungsmitglied "teilweise innerhalb und teilweise außerhalb" des geschützten Fahrzeugs aufhält oder befindet, kann vorliegend bedeuten, dass das Besatzungsmitglied beispielsweise seinen Oberkörper, insbesondere zumindest seinen Kopf, aus einer wie zuvor erwähnten Lukenöffnung streckt, um über Luke zu fahren. In diesem Fall kann sich beispielsweise der Unterkörper des Besatzungsmitglieds in einem Innenraum des geschützten Fahrzeugs oder der geschützten Fahrzeugzelle befinden, wobei sich der Oberkörper außerhalb dieses Innenraums in einer Umgebung des geschützten Fahrzeugs befindet. "Teilweise innerhalb und teilweise außerhalb" ist vorliegend insbesondere so zu verstehen, dass sich das Besatzungsmitglied gleichzeitig teilweise innerhalb und teilweise außerhalb des Innenraums aufhält.

Dem geschützten Fahrzeug ist bevorzugt ein Koordinatensystem mit einer ersten Raumrichtung, Längsrichtung oder x-Richtung, einer zweiten Raumrichtung, Hochrichtung oder y-Richtung und einer dritten Raumrichtung, Querrichtung oder z-Richtung zugeordnet. Die Richtungen sind insbesondere senkrecht zueinander orientiert. Eine Bewegung des geschützten Fahrzeugs um die x-Richtung kann als Rollen oder Rollbewegung bezeichnet werden. Eine Bewegung des geschützten Fahrzeugs um die y-Richtung kann als Gieren oder Gierbewegung bezeichnet werden. Eine Bewegung des geschützten Fahrzeugs um die z-Richtung kann als Nicken oder Nickbewegung bezeichnet werden. Eine Fahrtrichtung des geschützten Fahrzeugs ist vorzugsweise entgegen der x-Richtung orientiert. Das geschützte Fahrzeug kann sich jedoch auch - beispielsweise bei einer Rückwärtsfahrt - entgegen der Fahrtrichtung fortbewegen.

Unter einem "Überschlag" des geschützten Fahrzeugs ist vorliegend insbesondere zu verstehen, dass sich das geschützte Fahrzeug zumindest von den Rädern auf das Dach oder auf die Vorderwand dreht. Dies schließt jedoch nicht aus, dass sich das geschützte Fahrzeug bei dem Überschlag zumindest einmal oder auch mehrmals um die bevorzugt senkrecht zu den Radachsen orientierte x-Richtung und/oder um die bevorzugt parallel zu den Radachsen orientierte z-Richtung überschlägt oder dreht. Ein Überschlag des geschützten Fahrzeugs kann auch eine kombinierte Roll-, Gier- und/oder Nickbewegung sein.

"Unmittelbar vor dem Überschlag" kann vorliegend bedeuten, dass das Überrollschutzsystem Bruchteile von Sekunden vor dem eigentlichen Überschlag ausgelöst wird. Dies kann basierend auf Sensorsignalen der Sensorik erfolgen. Die Sensorik kann verschiedenste Sensoren umfassen. Beispielsweise kann die Sensorik einen oder mehrere Neigungssensoren, einen oder mehrere Lagesensoren, einen oder mehrere Beschleunigungssensoren oder dergleichen aufweisen.

Die Sensorik ist insbesondere mit der Regel- und Steuereinheit des Überrollschutzsystems wirkverbunden. Die Wirkverbindung zwischen der Sensorik und der Regel- und Steuereinheit kann drahtgebunden oder drahtlos sein. Die Wirkverbindung kann direkt oder unmittelbar sein. In diesem Fall ist eine direkte Verbindung zwischen der Sensorik und der Regel- und Steuereinheit vorgesehen. Die Wirkverbindung kann jedoch auch indirekt oder mittelbar sein. In diesem Fall kann zwischen die Sensorik und die Regel- und Steuereinheit ein Rechner, insbesondere ein Feuerleitrechner, des Fahrzeugs geschaltet sein, der die Regel- und Steuereinheit basierend auf Sensorsignalen der Sensorik ansteuert. In diesem Fall kann die Sensorik mit dem Rechner verbunden sein.

Die Regel- und Steuereinheit kann ein wie zuvor erwähnter Rechner, insbesondere ein Feuerleitrechner, oder Teil eines derartigen Rechners des geschützten Fahrzeugs sein. Die Regel- und Steuereinheit kann insbesondere auch ein fahrzeuginternes System, wie beispielsweise ein CAN-Knoten (Engl.: Controller Area Network), oder ein beliebiges Steuergerät sein. Die Regel- und Steuereinheit dient insbesondere zur Datenauswertung und zur Weitergabe von Steuersignalen an den Turm. Ferner kann auch der Rechner dazu eingerichtet sein, Daten auszuwerten und Steuersignale an die Regel- und Steuereinheit weiterzugeben, um den Turm anzusteuern.

Mit Hilfe der Sensorik kann beispielsweise eine Verkippung des geschützten Fahrzeugs um die x-Richtung, um die y-Richtung und/oder um die z-Richtung erfasst werden. Wird ein bestimmter voreingestellter Grenzwert der Verkippung des geschützten Fahrzeugs überschritten, so dass mit einer gewissen Wahrscheinlichkeit zu erwarten ist, dass sich das geschützte Fahrzeug überschlagen wird, so steuert die Regel- und Steuereinheit und/oder der Rechner den Turm derart an, dass dieser von dem Ausgangszustand in den Schutzzustand verbracht wird. Die Sensorik zur Überschlagsdetektion kann ferner auch für weitere Komponenten des geschützten Fahrzeugs genutzt werden, welche spezifische Lageinformationen des geschützten Fahrzeugs benötigen. Dies betrifft beispielsweise eine Waffensensorik der Bewaffnung des geschützten Fahrzeugs.

Der Turm ist insbesondere um eine Drehachse drehbar an der geschützten Fahrzeugzelle oder an dem geschützten Fahrzeug gelagert. Der Turm kann auch als Geschützturm oder Waffenturm bezeichnet werden. Die Bewaffnung kann beispielsweise eine Maschinenkanone oder eine Glattrohrkanone sein. Die Bewaffnung umfasst vorzugsweise ein Waffenrohr, welches mit Hilfe des Turms verschwenkbar ist. In dem Schutzzustand kann sich das geschützte Fahrzeug mit Hilfe des Waffenrohrs auf dem Untergrund abstützen.

In dem Ausgangszustand des Turms kann zum Beispiel mit Hilfe der Bewaffnung ein zu bekämpfendes Ziel anvisiert und bekämpft werden. Hierzu kann mit Hilfe der zuvor erwähnten Waffensensorik das zu bekämpfende Ziel erfasst und/oder identifiziert werden. Der Rechner und/oder die Regel- und Steuereinheit steuert dann eine Antriebseinheit des Turms derart an, dass der Turm das Waffenrohr auf das zu bekämpfende Ziel ausrichtet, auf dem Ziel hält und dieses gegebenenfalls bekämpft. In dem Schutzzustand hingegen ist eine Bekämpfung des Ziels bevorzugt nicht möglich oder nicht erwünscht.

Der Ausgangszustand kann insbesondere ein wie zuvor erwähnter Gefechtszustand des Turms sein. Dies ist jedoch nicht zwingend erforderlich. Unter einem "Gefechtszustand" ist vorliegend insbesondere ein von dem Schutzzustand abweichender Zustand des Turms zu verstehen, in dem der Turm, beispielsweise mit Hilfe der Waffensensorik, ein Ziel erfassen, halten und bekämpfen kann, wie dies bereits zuvor erläutert wurde. Für den Fall, dass der Ausgangszustand ein wie zuvor erwähnter Gefechtszustand ist, können die Begriffe "Ausgangszustand" und "Gefechtszustand" beliebig gegeneinander getauscht werden.

Außerdem kann der Ausgangszustand auch ein Transportzustand des Turms sein. Unter einem "Transportzustand" ist vorliegend insbesondere ein von dem Schutzzustand abweichender Zustand des Turms zu verstehen, in dem das Fahrzeug, beispielsweise auf einem Tieflader, transportiert wird. Der Turm wird dann zum Transportieren des Fahrzeugs in den Ausgangszustand verbracht. Für den Fall, dass der Ausgangszustand ein wie zuvor erwähnter Transportzustand ist, können die Begriffe "Ausgangszustand" und "Transportzustand" beliebig gegeneinander getauscht werden.

Ferner kann der Ausgangszustand auch ein Fahrzustand des Turms sein. Unter einem "Fahrzustand" ist vorliegend insbesondere ein von dem Schutzzustand abweichender Zustand des Turms zu verstehen, in dem das Fahrzeug fährt, jedoch mit Hilfe des Turms kein Ziel erfasst und/oder bekämpft wird. Der Turm wird dann zum Fahren des Fahrzeugs in den Ausgangszustand verbracht. Für den Fall, dass der Ausgangszustand ein wie zuvor erwähnter Fahrzustand ist, können die Begriffe "Ausgangszustand" und "Fahrzustand" beliebig gegeneinander getauscht werden.

Zusammenfassend ist der Ausgangszustand ein beliebiger von dem Schutzzustand abweichender Zustand des Turms. Beispielsweise kann der Ausgangszustand ein wie zuvor erwähnter Gefechtszustand, ein Transportzustand, ein Fahrzustand oder ein beliebiger anderer Zustand des Turms sein. Somit fallen unter den Begriff "Ausgangszustand" beispielsweise die Begriffe "Gefechtszustand", "Transportzustand" und/oder "Fahrzustand". Der Schutzzustand unterscheidet sich somit insbesondere dadurch von dem Ausgangszustand, dass sich das Fahrzeug in dem Schutzzustand mit Hilfe des Turms und/oder der Bewaffnung auf dem Untergrund abstützen kann, was in dem Ausgangszustand nicht möglich oder zumindest nicht erwünscht ist.

Das geschützte Fahrzeug stützt sich in dem Schutzzustand somit mit dem Turm und/oder mit der Bewaffnung auf dem Untergrund ab, so dass das Besatzungsglied genug Zeit erhält, um sich vollständig in den Innenraum des geschützten Fahrzeugs oder der geschützten Fahrzeugzelle zurückzuziehen. Für den Fall, dass sich das geschützte Fahrzeug vollständig oder auch mehrfach überschlägt und beispielsweise mit den Rädern nach oben zum Liegen kommt, dient der Turm, insbesondere die Bewaffnung, als Überrollkäfig, so dass die Lukenöffnung geschützt wird und das geschützte Fahrzeug nicht mit der Wandung, die beispielsweise Teil der Vorderwand sein kann, auf dem Untergrund aufkommt.

Dass das Besatzungsmitglied während eines Überschlags des geschützten Fahrzeugs "geschützt" ist, bedeutet vorliegend insbesondere, dass das Überrollschutzsystem verhindert, dass das Besatzungsmitglied zwischen dem geschützten Fahrzeug und dem Untergrund, auf dem sich das geschützte Fahrzeug fortbewegt, eingeklemmt wird. Insbesondere wird das Besatzungsmitglied während eines Überschlags des geschützten Fahrzeugs in dem Innenraum des geschützten Fahrzeugs oder der geschützten Fahrzeugzelle geschützt.

Gemäß einer Ausführungsform ist der Turm dazu eingerichtet, sich in dem Schutzzustand mit Hilfe der Bewaffnung auf dem Untergrund abzustützen.

Insbesondere stützt sich der Turm, wie zuvor erwähnt, mit Hilfe seines der Bewaffnung zugeordneten Waffenrohrs auf dem Untergrund ab. Hierdurch kann das Waffenrohr beschädigt, beispielsweise verbogen, werden. Somit kann die Bewaffnung "geopfert" werden, um das Besatzungsmitglied zu retten.

Gemäß einer weiteren Ausführungsform ist der Turm dazu eingerichtet, sich in dem Schutzzustand mit Hilfe eines Überhangs des Turms auf dem Untergrund abzustützen.

Unter einem "Überhang" des Turms ist vorliegend ein Bereich des Turms zu verstehen, welcher bei einer Drehung des Turms gegenüber dem geschützten Fahrzeug oder der geschützten Fahrzeugzelle seitlich über das geschützte Fahrzeug oder über die geschützte Fahrzeugzelle hinausragt. Diese Abstützmöglichkeit mit Hilfe des Überhangs ergibt sich insbesondere, wenn das geschützte Fahrzeug ein Kampfpanzer ist. In diesem Fall kann die Bewaffnung eine Glattrohrkanone sein. Der Überhang ist der Bewaffnung abgewandt an dem Turm vorgesehen. In dem Überhang kann beispielsweise ein Ladeautomat der Bewaffnung untergebracht sein. Bei einem Schützenpanzer wäre ein derartiger Überhang eher ungewöhnlich, jedoch ebenfalls einsetzbar.

Gemäß einer weiteren Ausführungsform weist die Bewaffnung ein Waffenrohr auf, wobei die Bewaffnung dazu eingerichtet ist, sich in dem Schutzzustand mit dem Waffenrohr auf dem Untergrund abzustützen.

Die Bewaffnung kann mehrere Waffenrohre aufweisen. In diesem Fall kann die Bewaffnung beispielsweise eine nach dem Gatling-Prinzip funktionierende Maschinenkanone sein. Wie zuvor erwähnt, kann das Waffenrohr bei einem Überschlag des geschützten Fahrzeugs durch das Verbringen des Turms in den Schutzzustand beschädigt werden. Dies wird jedoch vor dem Hintergrund der Rettung des Besatzungsmitglieds hingenommen.

Gemäß einer weiteren Ausführungsform bewegt sich das Waffenrohr bei dem Verbringen des Turms von dem Ausgangszustand in den Schutzzustand über das Besatzungsmitglied.

Insbesondere wird das Waffenrohr in dem Schutzzustand über dem Besatzungsmitglied gehalten, so dass das geschützte Fahrzeug bei einem Überschlag desselben auf das Waffenrohr stürzt und so das Besatzungsmitglied vor einem Kontakt mit dem Untergrund schützt. Das Waffenrohr fungiert somit als Überrollkäfig für das Besatzungsmitglied. Insbesondere bewegt sich das Waffenrohr bei dem Verbringen des Turms von dem Ausgangszustand in den Schutzzustand über eine wie zuvor erwähnte Lukenöffnung, aus der sich das Besatzungsmitglied herausstreckt.

Gemäß einer weiteren Ausführungsform weist das Überrollschutzsystem eine Antriebseinheit zum Antreiben des Turms auf, wobei die Antriebseinheit zum Verbringen des Turms aus dem Ausgangszustand in den Schutzzustand dazu eingerichtet ist, den Turm um eine Drehachse zu drehen und/oder die Bewaffnung um eine Elevationsachse zu schwenken.

Die Drehachse des Turms kann parallel zu der y-Richtung orientiert sein oder mit dieser übereinstimmen. Die Elevationsachse ist vorzugsweise senkrecht zu der Drehachse orientiert. Die Elevationsachse kann parallel zu der z-Richtung orientiert sein oder mit dieser übereinstimmen. Mit Hilfe der Antriebseinheit kann somit eine Lageänderung des Waffenrohrs sowohl um die Drehachse als auch um die Elevationsachse vorgenommen werden. Das Waffenrohr kann somit beispielsweise auf einem zu bekämpfenden Ziel gehalten werden.

Gemäß einer weiteren Ausführungsform weist das Überrollschutzsystem einen Rechner auf, wobei der Rechner der Regel- und Steuereinheit basierend auf den Sensorsignalen der Sensorik Informationen zum Ansteuern der Antriebseinheit bereitstellt.

Wie zuvor erwähnt, ist der Rechner insbesondere ein Feuerleitrechner des Fahrzeugs und kann auch als solcher bezeichnet werden. Die Antriebseinheit kann für eine wie zuvor erwähnte Lageänderung des Waffenrohrs basierend auf Sensorsignalen der Waffensensorik von dem Rechner und/oder der Regel- und Steuereinheit angesteuert werden. Somit ist mit Hilfe der Waffensensorik ein zu bekämpfendes Ziel erfassbar und/oder identifizierbar. Der Rechner kann die Antriebseinheit, entweder direkt oder indirekt mit Hilfe der Regel- und Steuereinheit, derart ansteuern, dass diese das Waffenrohr auf das Ziel ausrichtet, auf dem Ziel hält und dieses gegebenenfalls bekämpft. Der Rechner ist jedoch auch dazu geeignet, den Turm aus dem Ausgangszustand in den Schutzzustand zu verbringen. Hierzu kann die Regel- und Steuereinheit basierend auf den Sensorsignalen der Sensorik von dem Rechner angesteuert werden. Alternativ kann auch eine direkte Verbindung zwischen dem Rechner und der Antriebseinheit vorgesehen sein. In diesem Fall kann der Rechner die Antriebseinheit direkt ansteuern. Die "Informationen" können beispielsweise für eine Lageänderung des Waffenrohrs erforderliche Daten oder Steuersignale sein. Beispielsweise kann der Rechner die Feuerleitung für den Turm oder das Fahrzeug übernehmen. Beispielsweise kann der Rechner der Regel- und Steuereinheit eine Freigabe geben, die Bewaffnung zu steuern und so zu verschwenken.

Gemäß einer weiteren Ausführungsform ist der Rechner dazu eingerichtet, eine Priorisierung zwischen dem Ausgangszustand und dem Schutzzustand derart vorzunehmen, dass der Turm trotz eines drohenden Überschlags des geschützten Fahrzeugs in dem Ausgangszustand verbleibt.

Das heißt insbesondere, dass das Überrollschutzsystem deaktiviert sein kann, so dass die Bewaffnung im Zweifel das zu bekämpfende Ziel weiterverfolgt. Das Überrollschutzsystem wird in diesem Fall nicht ausgelöst, wodurch auch der Turm nicht in den Schutzzustand verbracht wird, was zur Folge hätte, dass die Bewaffnung von ihrem anvisierten Ziel wegbewegt werden würde. Beispielsweise kann ein von dem Besatzungsmitglied zu betätigender Schalter vorgesehen sein, um das Überrollschutzsystem wahlweise zu aktivieren und zu deaktivieren. Beispielsweise kann das Überrollschutzsystem deaktiviert werden, wenn ein Beschuss des geschützten Fahrzeugs stattfindet und die Gefahr durch diesen Beschuss größer erscheint als die Folgen eines möglichen Überschlags des geschützten Fahrzeugs. Das geschützte Fahrzeug befindet sich dann beispielsweise in einem Gefechtsmodus, in dem das Überrollschutzsystem nicht ausgelöst wird oder nicht ausgelöst werden kann.

Gemäß einer weiteren Ausführungsform ist die Regel- und Steuereinheit in den Rechner integriert.

Die Regel- und Steuereinheit kann als computerimplementierte Software in den Rechner integriert werden oder als eigenständiges Modul ausgestaltet sein. Das heißt insbesondere, dass die Regel- und Steuereinheit Teil des Rechners sein kann. Beispielsweise kann die Regel- und Steuereinheit ein in dem Rechner verbauter Schaltkreis sein. Umgekehrt kann der Rechner auch Teil der Regel- und Steuereinheit sein. Es ist jedoch nicht zwingend erforderlich, dass die Regel- und Steuereinheit Teil des Rechners oder umgekehrt ist. Alternativ kann die Regel- und Steuereinheit ein von dem Rechner getrenntes Bauteil sein, das mit dem Rechner jedoch wirkverbunden ist. Hier kann eine drahtgebundene oder drahtlose Wirkverbindung vorgesehen sein. Der Rechner dient insbesondere zur Datenauswertung von Sensorsignalen der Sensorik und zur Weitergabe von Steuersignalen an die Regel- und Steuereinheit und damit auch an die Antriebseinheit des Turms. Alternativ kann der Rechner auch direkt Steuersignale an die Antriebseinheit weitergeben. Ferner kann auch die Regel- und Steuereinheit dazu eingerichtet sein, Sensorsignale der Sensorik auszuwerten.

Gemäß einer weiteren Ausführungsform sind die Sensorik und/oder der Rechner dazu eingerichtet, zu ermitteln, ob ein Überschlag des geschützten Fahrzeugs droht oder nicht, ob sich das geschützte Fahrzeug in einem Gefechtsmodus befindet oder nicht, in welche Raumrichtung ein Überschlag des geschützten Fahrzeugs droht, mit welcher Geschwindigkeit ein Überschlag des geschützten Fahrzeugs erfolgen wird und/oder in welcher Position sich die Bewaffnung befindet.

Alternativ oder zusätzlich können auch die Sensorik und/oder die Regel- und Steuereinheit dazu eingerichtet sein, zu ermitteln, ob ein Überschlag des geschützten Fahrzeugs droht oder nicht, ob sich das geschützte Fahrzeug in dem Gefechtsmodus befindet oder nicht, in welche Raumrichtung ein Überschlag des geschützten Fahrzeugs droht, mit welcher Geschwindigkeit ein Überschlag des geschützten Fahrzeugs erfolgen wird und/oder in welcher Position sich die Bewaffnung befindet. Anhand dieser zuvor erwähnten Fahrzeugparameter können die Sensorik, der Rechner und/oder die Regel- und Steuereinheit die Antriebseinheit des Turms ansteuern. Insbesondere kann der Rechner basierend auf Sensorsignalen der Sensorik die Regel- und Steuereinheit mit Informationen zum Ansteuern der Antriebseinheit des Turms versorgen. Wenn sich das geschützte Fahrzeug beispielsweise in dem zuvor erwähnten Gefechtsmodus befindet, so kann es sein, dass ein automatisches Verbringen des Turms von dem Ausgangszustand in den Schutzzustand nicht erwünscht ist. In diesem Fall deaktiviert der Rechner und/oder die Regel- und Steuereinheit das Überrollschutzsystem. Alternativ kann das Deaktivieren des Überrollschutzsystems auch mit Hilfe des zuvor erwähnten Schalters erfolgen.

Gemäß einer weiteren Ausführungsform ist der Rechner dazu eingerichtet, eine Prognose hinsichtlich einer zu erwartenden Überschlagsrichtung, einer zu erwartenden Überschlagsgeschwindigkeit und/oder einer zu erwartenden Überschlagszeit zu erstellen.

Alternativ oder zusätzlich kann die Regel- und Steuereinheit dazu eingerichtet sein, eine Prognose hinsichtlich der zu erwartenden Überschlagsrichtung, der zu erwartenden Überschlagsgeschwindigkeit und/oder der zu erwartenden Überschlagszeit zu erstellen. Die Regel- und Steuereinheit und/oder der Rechner erstellen die Prognose anhand der zuvor erwähnten Sensorsignale und der ermittelten Fahrzeugparameter. Unter der "Überschlagsrichtung" ist vorliegend zu verstehen, um welche Raumrichtung sich das geschützte Fahrzeug voraussichtlich überschlagen wird. Unter der "Überschlagsgeschwindigkeit" kann vorliegend beispielsweise eine jeweilige Winkelgeschwindigkeit um die x-Richtung, die y⁻ Richtung und/oder die z-Richtung zu verstehen sein. Unter der "Überschlagszeit" kann vorliegend ein Zeitpunkt zu verstehen sein, bei dem voraussichtlich ein Überschlag des geschützten Fahrzeugs zu erwarten ist. Ferner kann unter der "Überschlagszeit" auch zu verstehen sein, wie lange beispielsweise eine vollständige Umdrehung um eine der zuvor erwähnten Richtungen dauern wird.

Ferner wird ein geschütztes Fahrzeug mit zumindest einem derartigen Überrollschutzsystem vorgeschlagen.

Das geschützte Fahrzeug weist bevorzugt genau ein derartiges Überrollschutzsystem auf. Für den Fall, dass das geschützte Fahrzeug beispielsweise mehrere Türme aufweist, kann dieses auch mehrere Überrollschutzsysteme aufweisen. Das geschützte Fahrzeug ist insbesondere ein militärisches Fahrzeug. Das geschützte Fahrzeug kann daher auch als Militärfahrzeug bezeichnet werden. Insbesondere ist das geschützte Fahrzeug ein gepanzertes Transportfahrzeug. Das geschützte Fahrzeug kann beispielsweise auch ein Schützenpanzer, ein Kampfpanzer, ein Bergepanzer, ein Minenräumpanzer, ein Spürpanzer oder dergleichen sein. Das geschützte Fahrzeug kann insbesondere auch ein Radpanzer sein. Das geschützte Fahrzeug kann als geschütztes Militärfahrzeug bezeichnet werden. Wie zuvor erwähnt, umfasst das geschützte Fahrzeug die geschützte Fahrzeugzelle. Die geschützte Fahrzeugzelle ist bevorzugt in der Art eines austauschbaren Missionsmoduls gestaltet.

Besonders bevorzugt umfasst das geschützte Fahrzeug ein Überrollschutzsystem mit einem Turm, der eine Bewaffnung trägt, einer Sensorik, die dazu eingerichtet ist, eine Verkippung des geschützten Fahrzeugs um zumindest eine Raumrichtung zu erfassen, und eine Regel- und Steuereinheit, die dazu eingerichtet ist, den Turm basierend auf Sensorsignalen der Sensorik unmittelbar vor oder bei einem Überschlag des geschützten Fahrzeugs von einem Ausgangszustand in einen Schutzzustand zu verbringen, wobei der Turm dazu eingerichtet ist, sich in dem Schutzzustand auf einem Untergrund, auf dem sich das geschützte Fahrzeug fortbewegt, abzustützen, so dass ein Besatzungsmitglied, das sich teilweise innerhalb und teilweise außerhalb des geschützten Fahrzeugs aufhält, während des Überschlags des geschützten Fahrzeugs geschützt ist.

Außerdem wird eine geschützte Fahrzeugzelle für ein derartiges geschütztes Fahrzeug vorgeschlagen. Die geschützte Fahrzeugzelle umfasst ein Überrollschutzsystem mit einem Turm, der eine Bewaffnung trägt, einer Sensorik, die dazu eingerichtet ist, eine Verkippung der geschützten Fahrzeugzelle um zumindest eine Raumrichtung zu erfassen, und eine Regel- und Steuereinheit, die dazu eingerichtet ist, den Turm basierend auf Sensorsignalen der Sensorik unmittelbar vor oder bei einem Überschlag der geschützten Fahrzeugzelle von einem Ausgangszustand in einen Schutzzustand zu verbringen, wobei der Turm dazu eingerichtet ist, sich in dem Schutzzustand auf einem Untergrund, auf dem sich die geschützte Fahrzeugzelle fortbewegt, abzustützen, so dass ein Besatzungsmitglied, das sich teilweise innerhalb und teilweise außerhalb der geschützten Fahrzeugzelle aufhält, während des Überschlags der geschützten Fahrzeugzelle geschützt ist.

Gemäß einer Ausführungsform weist das geschützte Fahrzeug eine geschützte Fahrzeugzelle auf, an welcher der Turm drehbar gelagert ist.

Vorzugsweise ist der Turm an dem zuvor erwähnten Dach der geschützten Fahrzeugzelle oder des geschützten Fahrzeugs angeordnet. Wie zuvor erwähnt, ist der Turm um seine Drehachse drehbar an der geschützten Fahrzeugzelle gelagert.

Gemäß einer weiteren Ausführungsform stützen sich der Turm und die geschützte Fahrzeugzelle in dem Schutzzustand gemeinsam auf dem Untergrund ab.

Das heißt insbesondere, dass das geschützte Fahrzeug beispielsweise dann, wenn die Räder nach oben orientiert sind, nicht nur mit dem Turm auf dem Untergrund aufliegt, sondern dass auch die geschützte Fahrzeugzelle, beispielsweise mit der zuvor erwähnten Wandung, auf dem Untergrund aufliegt und sich so an diesem abstützt.

Gemäß einer weiteren Ausführungsform weist die geschützte Fahrzeugzelle eine Lukenöffnung auf, wobei sich ein Waffenrohr der Bewaffnung bei dem Verbringen des Turms von dem Ausgangszustand in den Schutzzustand über die Lukenöffnung bewegt.

Vorzugsweise streckt sich das Besatzungsmitglied aus der Lukenöffnung in die Umgebung des geschützten Fahrzeugs hinein. Dadurch, dass sich das Waffenrohr über die Lukenöffnung bewegt, wird das Besatzungsmitglied mit Hilfe des Waffenrohrs geschützt. Das Waffenrohr fungiert dann als Überrollschutzkäfig zum Schutz des Besatzungsmitglieds.

Die für das vorgeschlagene Überrollschutzsystem beschriebenen Ausführungsformen und Merkmale gelten für das vorgeschlagene geschützte Fahrzeug entsprechend und umgekehrt.

"Ein" ist vorliegend nicht zwingend als beschränkend auf genau ein Element zu verstehen. Vielmehr können auch mehrere Elemente, wie beispielsweise zwei, drei oder mehr, vorgesehen sein. Auch jedes andere hier verwendete Zählwort ist nicht dahingehend zu verstehen, dass eine Beschränkung auf genau die genannte Anzahl von Elementen gegeben ist. Vielmehr sind zahlenmäßige Abweichungen nach oben und nach unten möglich, soweit nichts Gegenteiliges angegeben ist.

Weitere mögliche Implementierungen des Überrollschutzsystems und/oder des geschützten Fahrzeugs umfassen auch nicht explizit genannte Kombinationen von zuvor oder im Folgenden bezüglich der Ausführungsbeispiele beschriebenen Merkmalen oder Ausführungsformen. Dabei wird der Fachmann auch Einzelaspekte als Verbesserungen oder Ergänzungen zu der jeweiligen Grundform des Überrollschutzsystems und/oder des geschützten Fahrzeugs hinzufügen.

Weitere vorteilhafte Ausgestaltungen und Aspekte des Überrollschutzsystems und/oder des geschützten Fahrzeugs sind Gegenstand der Unteransprüche sowie der im Folgenden beschriebenen Ausführungsbeispiele des Überrollschutzsystems und/oder des geschützten Fahrzeugs. Im Weiteren werden das Überrollschutzsystem und/oder das geschützte Fahrzeug anhand von bevorzugten Ausführungsformen unter Bezugnahme auf die beigelegten Figuren näher erläutert.
- Fig. 1: zeigt eine schematische Seitenansicht einer Ausführungsform eines geschützten Fahrzeugs;
- Fig. 2: zeigt eine schematische Aufsicht einer Ausführungsform eines Überrollschutzsystems für das geschützte Fahrzeug gemäß Fig. 1;
- Fig. 3: zeigt eine schematische Schnittansicht des Überrollschutzsystems gemäß der Schnittlinie III-III der Fig. 2;
- Fig. 4: zeigt eine schematische Vorderansicht des geschützten Fahrzeugs gemäß Fig. 1;
- Fig. 5: zeigt eine weitere schematische Vorderansicht des geschützten Fahrzeugs gemäß Fig. 1;
- Fig. 6: zeigt eine weitere schematische Seitenansicht des geschützten Fahrzeugs gemäß Fig. 1; und
- Fig. 7: zeigt eine weitere schematische Vorderansicht des geschützten Fahrzeugs gemäß Fig. 1.

In den Figuren sind gleiche oder funktionsgleiche Elemente mit denselben Bezugszeichen versehen worden, sofern nichts anderes angegeben ist.

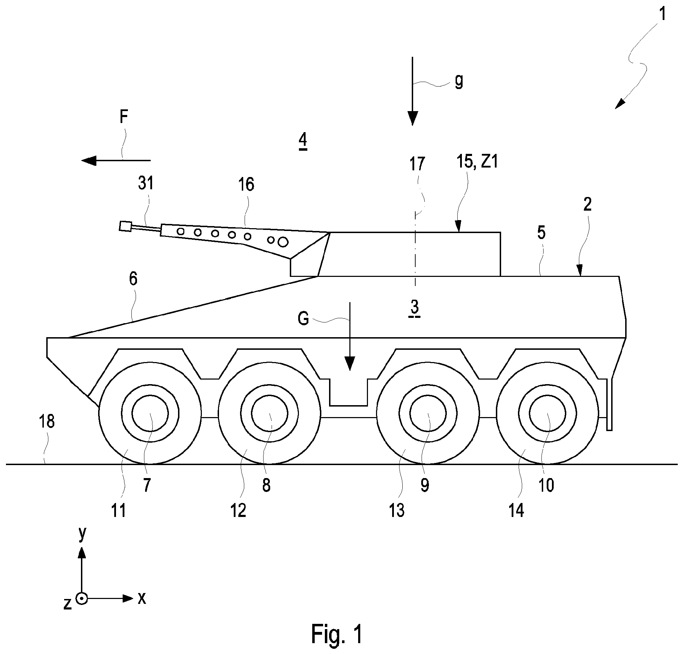

Die Fig. 1 zeigt eine schematische Seitenansicht einer Ausführungsform eines geschützten Fahrzeugs 1.

Das geschützte Fahrzeug 1 wird nachfolgend lediglich als Fahrzeug bezeichnet. Das Fahrzeug 1 kann ein militärisches Fahrzeug, insbesondere ein militärisches Nutzfahrzeug, sein. Das Fahrzeug 1 kann daher auch als Militärfahrzeug oder als Militärnutzfahrzeug bezeichnet werden. Insbesondere ist das Fahrzeug 1 ein gepanzertes Transportfahrzeug. Das Fahrzeug 1 kann beispielsweise auch ein Schützenpanzer, ein Kampfpanzer, ein Bergepanzer, ein Minenräumpanzer, ein Spürpanzer oder dergleichen sein. Das Fahrzeug 1 kann auch ein Radpanzer sein.

Das Fahrzeug 1 umfasst eine geschützte Fahrzeugzelle 2. Im Folgenden wird die geschützte Fahrzeugzelle 2 lediglich als Fahrzeugzelle bezeichnet. Die Fahrzeugzelle 2 kann eine Fahrzeugwanne sein und daher auch als solche bezeichnet werden. Die Begriffe "Fahrzeugzelle" und "Fahrzeugwanne" sind daher beliebig gegeneinander tauschbar. Das Fahrzeug 1 kann bewaffnet oder unbewaffnet sein. Das Fahrzeug 1 kann ein Fahrzeuggewicht von über 20 Tonnen aufweisen.

Die Fahrzeugzelle 2 ist gepanzert. Die Fahrzeugzelle 2 ist insbesondere gegen Beschuss, Sprengfallen, unkonventionelle Spreng- oder Brandvorrichtungen (USBV, Engl.: Improvised Explosive Devices, IED), Minen oder dergleichen geschützt. Die Fahrzeugzelle 2 umschließt einen Fahrzeuginnenraum oder Innenraum 3, in dem sich eine Besatzung des Fahrzeugs 1 aufhalten kann. Der Innenraum 3 ist über nicht gezeigte Türen und/oder Luken von einer Umgebung 4 des Fahrzeugs 1 her zugänglich. Der Innenraum 3 kann in mehrere Abschnitte oder Räume unterteilt sein, die voneinander getrennt sein können. Beispielsweise kann der Innenraum 3 in einen Maschinenraum, einen Besatzungsraum und/oder in einen Fahrzeugführerraum unterteilt sein. Dies ist jedoch nicht zwingend erforderlich.

Die Fahrzeugzelle 2 kann ferner zumindest teilweise oder vollständig modular ausgetauscht werden. In diesem Fall kann das Fahrzeug 1 unterschiedliche Missionsmodule, Missionskits oder Rüstsätze aufweisen, die beliebig austauschbar sind. Als Beispiel für ein derartiges Missionsmodul kann ein Sanitätsmodul genannt werden. Dieser zuvor erläuterte modulare Aufbau ist jedoch beliebig. Die Fahrzeugzelle 2 umfasst beispielsweise ein Dach 5 und eine geneigt zu dem Dach 5 angeordnete Vorderwand 6.

Das Fahrzeug 1 kann ein Radfahrzeug oder ein Kettenfahrzeug sein. Nachfolgend wird jedoch davon ausgegangen, dass das Fahrzeug 1 ein Radfahrzeug ist. Das Fahrzeug 1 umfasst mehrere Radachsen 7, 8, 9, 10, an denen Räder 11, 12, 13, 14 vorgesehen sind. Beispielsweise sind vier Radachsen 7, 8, 9, 10 mit acht Rädern 11, 12, 13, 14 vorgesehen. Es können jedoch auch weniger oder mehr als vier Radachsen 7, 8, 9, 10 vorgesehen sein. Unter einer "Radachse" ist vorliegend eine Achse zu verstehen, um die sich das jeweilige Rad 11, 12, 13, 14 dreht.

Die Anzahl der Radachsen 7, 8, 9, 10 ist grundsätzlich beliebig. Beispielsweise können vier Radachsen 7, 8, 9, 10 oder drei Radachsen 7, 8, 9, 10 vorgesehen sein. Jeder Radachse 7, 8, 9, 10 sind zwei Räder 11, 12, 13, 14 zugeordnet. Zumindest die Räder 11, 12 sind lenkbar. Bevorzugt sind jedoch alle Räder 11, 12, 13, 14 lenkbar. Vorzugsweise umfasst das Fahrzeug 1 einen Allradantrieb. Das heißt, alle Radachsen 7, 8, 9, 10 sind angetrieben.

Das Fahrzeug 1 kann einen Turm 15 mit einer Bewaffnung 16 aufweisen. Der Turm 15 ist drehbar an der Fahrzeugzelle 2 gelagert. Der Turm 15 kann eine elektrische oder hydraulische Antriebseinheit umfassen, um den Turm 15 um eine Drehachse 17 relativ zu der Fahrzeugzelle 2 zu drehen. Der Turm 15 kann jedoch auch manuell betrieben werden, falls die Antriebseinheit ausfällt. Die Bewaffnung 16 kann eine Maschinenkanone oder dergleichen sein. Die Bewaffnung 16 kann eine Primärbewaffnung oder Hauptbewaffnung sein. Es kann zusätzlich eine Sekundärbewaffnung, beispielsweise in Form eines Maschinengewehrs, vorgesehen sein.

Dem Fahrzeug 1 ist ein Koordinatensystem mit einer ersten Raumrichtung, Längsrichtung oder x-Richtung x, einer zweiten Raumrichtung, Hochrichtung oder y-Richtung y und einer dritten Raumrichtung, Querrichtung oder z-Richtung z zugeordnet. Die Richtungen x, y, z sind senkrecht zueinander orientiert. Eine Bewegung des Fahrzeugs 1 um die x-Richtung x kann als Rollen oder Rollbewegung bezeichnet werden. Eine Bewegung des Fahrzeugs 1 um die y⁻Richtung y kann als Gieren oder Gierbewegung bezeichnet werden. Eine Bewegung des Fahrzeugs 1 um die z-Richtung z kann als Nicken oder Nickbewegung bezeichnet werden.

Eine Schwerkraftrichtung g kann im Wesentlichen entgegen der y-Richtung y orientiert sein. Eine Gewichtskraft G des Fahrzeugs 1 wirkt entlang der Schwerkraftrichtung g. Das Fahrzeug 1 kann sich entlang einer Fahrtrichtung F und entgegen der Fahrtrichtung F auf einem Boden oder Untergrund 18 fortbewegen. Die Fahrtrichtung F kann entgegen der x-Richtung x orientiert sein. Der Untergrund 18 kann eine Fahrbahn oder ein beliebiges Gelände sein.

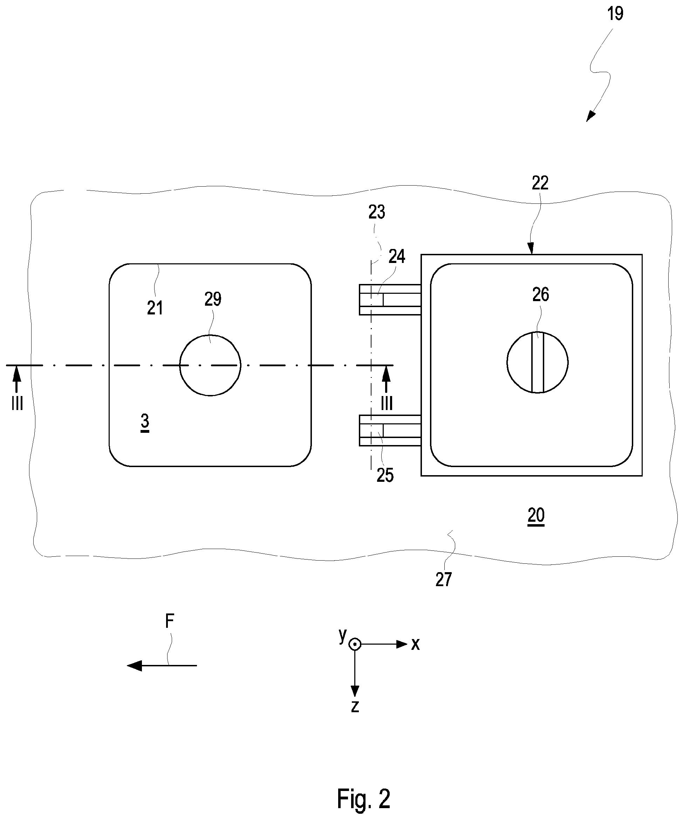

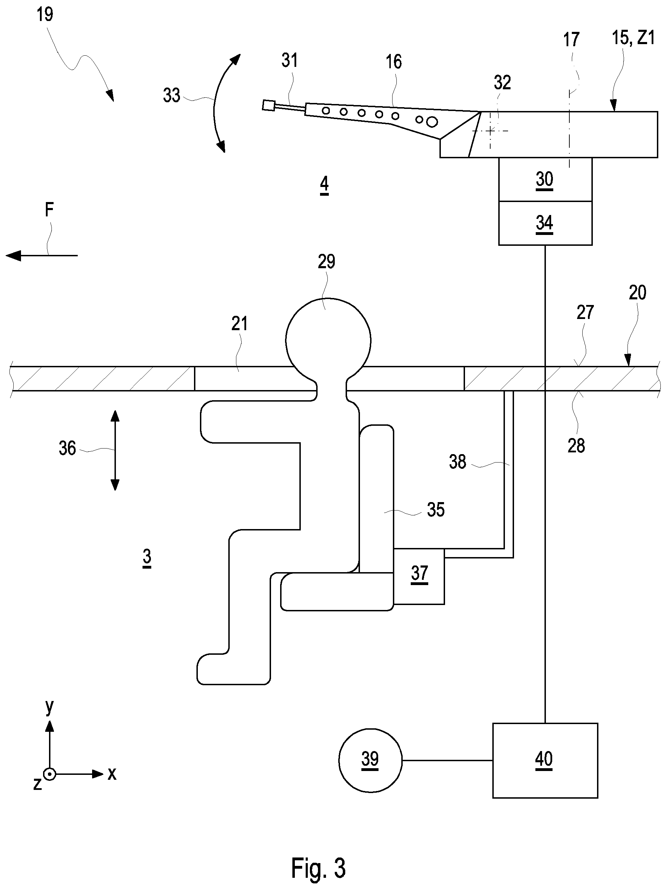

Die Fig. 2 zeigt eine schematische Aufsicht einer Ausführungsform eines Überrollschutzsystems 19 für das Fahrzeug 1. Die Fig. 3 zeigt eine schematische Schnittansicht des Überrollschutzsystems 19. Nachfolgend wird auf die Fig. 2 und 3 gleichzeitig Bezug genommen.

An einer Wandung 20 der Fahrzeugzelle 2, insbesondere an dem Dach 5 oder an der Vorderwand 6, ist eine Lukenöffnung 21 vorgesehen, über welche der Innenraum 3 in die Umgebung 4 verlassen oder der Innenraum 3 von der Umgebung 4 aus betreten werden kann. Die Wandung 20 kann beispielsweise Teil des Dachs 5 oder der Vorderwand 6 sein. Die Wandung 20 kann horizontal verlaufen. Die Wandung 20 kann jedoch auch schräg oder vertikal angeordnet sein.

Das Fahrzeug 1 kann beliebig viele Lukenöffnungen 21 aufweisen. Beispielsweise kann auch an dem Turm 15 eine derartige Lukenöffnung 21 vorgesehen sein. Demgemäß kann die Wandung 20 auch Teil des Turms 15 sein. Die Lukenöffnung 21 kann eine beliebige Geometrie aufweisen. Beispielsweise kann die Lukenöffnung 21 rechteckförmig oder rund sein. Entlang der z-Richtung z betrachtet kann die Lukenöffnung 21 links oder rechts von dem Turm 15 platziert sein.

Der Lukenöffnung 21 ist ein Lukendeckel 22 zugeordnet, mit dessen Hilfe die Lukenöffnung 21 verschlossen werden kann. Der Lukendeckel 22 ist in der Fig. 3 nicht gezeigt. Der Lukendeckel 22 kann ein Klapplukendeckel, ein Schiebelukendeckel, ein Hublukendeckel oder ein Deckel mit einer kombinierten translatorischen und rotatorischen Öffnungs- und Schließbewegung sein. Nachfolgend wird davon ausgegangen, dass der Lukendeckel 22 ein Klapplukendeckel ist. Das heißt, dass der Lukendeckel 22 um eine Drehachse 23 drehbar an der Wandung 20 gelagert ist. Die Drehachse 23 kann parallel zu der z-Richtung z verlaufen.

Dabei kann der Lukendeckel 22 von einer nicht gezeigten geschlossenen Position in eine in der Fig. 2 gezeigte geöffnete Position verbracht werden. Der Lukendeckel 22 kann in seiner geöffneten Position verriegelt werden, so dass sich der Lukendeckel 22 auch bei einem Überschlag des Fahrzeugs 1 nicht selbsttätig schließen kann.

Der Lukendeckel 22 ist mit Hilfe von Scharnieren 24, 25 an der Wandung 20 angeschlagen. In der geöffneten Position kann der Lukendeckel 22 auf der Wandung 20 aufliegen. Dies ist jedoch nicht zwingend erforderlich. Der Lukendeckel 22 kann in der geöffneten Position auch nicht an der Wandung 20 anliegen. Der Lukendeckel 22 kann eine Verriegelungseinheit 26 zum Verriegeln und Entriegeln des Lukendeckels 22 aufweisen. Die Wandung 20 weist eine der Umgebung 4 zugewandte Außenseite 27 auf. Eine der Außenseite 27 abgewandte Innenseite 28 der Wandung 20 ist dem Innenraum 3 zugewandt.

Bei einem derartigen Fahrzeug 1 kann es unter anderem aufgrund der unübersichtlichen Fahrzeuggeometrie erforderlich sein, dass einzelne Besatzungsmitglieder 29 über Luke fahren. Dies kann stehend oder sitzend erfolgen. "Über Luke" heißt dabei, dass zumindest der Kopf des jeweiligen Besatzungsmitglieds 29 aus der Lukenöffnung 21 in die Umgebung 4 hineinragt. Dies kann zum Beispiel für die Unterstützung des Fahrers durch den Kommandanten oder für eine bessere Führbarkeit des Fahrzeugs 1 im zivilen Straßenverkehr erforderlich sein. Dieser Umstand kann dazu führen, dass im Falle eines Überschlags des Fahrzeugs 1 das über Luke fahrende Besatzungsmitglied 29 tödlichen Gefahren ausgesetzt ist. Im schlimmsten Fall kann es dazu kommen, dass das Besatzungsmitglied 29 durch das Fahrzeug 1 zerquetscht und somit tödlich verletzt wird.

Um die vorgenannte Problematik zu entschärfen, ist das nachfolgend erläuterte Überrollschutzsystem 19 vorgesehen. Das Überrollschutzsystem 19 ist insbesondere auch für Fahrzeuggewichte von über 20 Tonnen geeignet.

Der Turm 15, insbesondere die Bewaffnung 16, ist Teil des Überrollschutzsystems 19. Wie zuvor erwähnt, ist der Turm 15 um die Drehachse 17 gegenüber dem Fahrzeug 1 oder der Fahrzeugzelle 2 drehbar. Die Drehachse 17 kann parallel zu der y-Richtung y orientiert sein oder mit dieser übereinstimmen. Zum Drehen des Turms 15 um die Drehachse 17 ist eine Antriebseinheit 30 vorgesehen, die Teil des Überrollschutzsystems 19 ist. Die Antriebseinheit 30 kann den Turm 15 elektrisch, hydraulisch und/oder pneumatisch antreiben. Der Turm 15 kann mit Hilfe der Antriebseinheit 30 beispielsweise um mehr als 360° gegenüber dem Fahrzeug 1 oder der Fahrzeugzelle 2 gedreht werden.

Die Bewaffnung 16 weist ein Waffenrohr 31 auf. Das Waffenrohr 31 kann in der Orientierung der Fig. 3 mit Hilfe der Antriebseinheit 30 um eine Elevationsachse 32 nach oben und nach unten geschwenkt werden, wie in der Fig. 3 mit Hilfe eines Doppelpfeils 33 angedeutet ist. Die Elevationsachse 32 ist senkrecht zu der Drehachse 17 orientiert. Die Elevationsachse 32 ist parallel zu der z-Richtung z orientiert oder stimmt mit dieser überein. Mit Hilfe der Antriebseinheit 30 kann somit eine Lageänderung des Waffenrohrs 31 sowohl um die Drehachse 17 als auch um die Elevationsachse 32 vorgenommen werden.

Die Antriebseinheit 30 kann für eine wie zuvor erwähnte Lageänderung des Waffenrohrs 31, beispielsweise basierend auf Sensorsignalen einer nicht gezeigten Waffensensorik, von einer Regel- und Steuereinheit 34 des Überrollschutzsystems 19 angesteuert werden. Die Regel- und Steuereinheit 34 kann ein fahrzeuginternes System, wie beispielsweise ein CAN-Knoten (Engl.: Controller Area Network), oder ein beliebiges Steuergerät sein. Mit Hilfe der vorgenannten Waffensensorik kann ein zu bekämpfendes Ziel erfassbar und/oder identifizierbar sein. Die Regel- und Steuereinheit 34 steuert die Antriebseinheit 30 derart an, dass diese das Waffenrohr 31 auf das Ziel ausrichtet, auf dem Ziel hält und dieses gegebenenfalls bekämpft. Hierzu löst die Regel- und Steuereinheit 34 die Bewaffnung 16 aus.

Das Überrollschutzsystem 19 umfasst ein entlang der y-Richtung y höhenverstellbares Tragelement 35, auf dem das Besatzungsmitglied 29 Platz nehmen kann. Das Tragelement 35 kann ein Sitz für das Besatzungsmitglied 29 sein. Demgemäß können vorliegend die Begriffe "Tragelement" und "Sitz" beliebig gegeneinander getauscht werden. Alternativ kann das Tragelement 35 auch eine Stehplattform für das Besatzungsmitglied 29 sein. Das Besatzungsmitglied 29 kann an einer derartigen Stehplattform festgeschnallt sein, so dass das Besatzungsmitglied 29 bei einem Überschlag des Fahrzeugs 1 nicht aus der Fahrzeugzelle 2 herausgeschleudert werden kann.

Nachfolgend wird jedoch davon ausgegangen, dass das Überrollschutzsystem 19 ein Tragelement 35 in Form eines Sitzes umfasst. Das Tragelement 35 kann an der Wandung 20 aufgehängt sein, wie nachfolgend noch erläutert wird. Das Besatzungsmitglied 29 ist an oder auf dem Tragelement 35 in Form eines Sitzes festgeschnallt, so dass das Besatzungsmitglied 29 auch in diesem Fall bei einem Überschlag des Fahrzeugs 1 nicht aus der Fahrzeugzelle 2 herausgeschleudert werden kann.

Das Tragelement 35 kann entlang der y-Richtung y nach oben und entgegen der y-Richtung y nach unten verfahren werden, wie in der Fig. 3 mit Hilfe eines Doppelpfeils 36 dargestellt ist. Hierdurch kann das Besatzungsmitglied 29 das Tragelement 35 derart einstellen, dass das Besatzungsmitglied 29 im Sitzen über Luke fahren kann. Diese Höhenverstellung des Tragelements 35 kann pneumatisch, hydraulisch, manuell, elektrisch oder durch eine Kombination dieser Wirkprinzipien erfolgen. Das Tragelement 35 kann an der Fahrzeugzelle 2, insbesondere an dem Dach 5 oder an der Vorderwand 6, aufgehängt sein.

Dem Tragelement 35 ist eine Verstelleinheit 37 zugeordnet, mit deren Hilfe das Tragelement 35 entlang und entgegen der y-Richtung y bewegt werden kann. Für den Fall, dass das Tragelement 35 ein Sitz ist, kann die Verstelleinheit 37 demgemäß als Sitzverstelleinheit bezeichnet werden. Demgemäß sind vorliegend die Begriffe "Verstelleinheit" und "Sitzverstelleinheit" gegeneinander tauschbar.

Mit dieser Verstelleinheit 37 kann die zuvor erwähnte Höhenverstellung des Tragelements 35 vorgenommen haben. Das Tragelement 35 kann fest mit der Verstelleinheit 37 verbunden sein. Die Verstelleinheit 37 wird vorliegend elektrisch angetrieben. Die Verstelleinheit 37 kann mitsamt dem Tragelement 35 mit Hilfe einer Aufhängung 38 an der Fahrzeugzelle 2, insbesondere an der Innenseite 28 der Wandung 20, aufgehängt sein. Die Aufhängung 38 kann strebenförmig sein.

Das Überrollschutzsystem 19 umfasst ferner eine Sensorik 39. Die Sensorik 39 kann verschiedenste Sensoren umfassen. Beispielsweise kann die Sensorik 39 einen oder mehrere Neigungssensoren, einen oder mehrere Lagesensoren, einen oder mehrere Beschleunigungssensoren oder dergleichen aufweisen. Die Sensorik 39 ist mit einem Rechner 40, insbesondere einem Feuerleitrechner, des Fahrzeugs 1 wirkverbunden. Der Rechner 40 ist bevorzugt ein Feuerleitrechner und kann daher auch als solcher bezeichnet werden. Die Begriffe "Rechner" und "Feuerleitrechner" können daher beliebig gegeneinander getauscht werden. Die Wirkverbindung kann drahtgebunden oder drahtlos sein.

Der Rechner 40 kann Teil der Regel- und Steuereinheit 34 oder umgekehrt sein. Beispielsweise kann die Regel- und Steuereinheit 34 ein in dem Rechner 40 verbauter Schaltkreis sein. Außerdem kann die Regel- und Steuereinheit 34 ein in dem Rechner 40 hinterlegtes Computerprogramm sein. Umgekehrt kann der Rechner 40 auch Teil der Regel- und Steuereinheit 34 sein. Der Rechner 40 kann insbesondere Teil des Überrollschutzsystems 19 sein.

Es ist jedoch nicht zwingend erforderlich, dass die Regel- und Steuereinheit 34 Teil des Rechners 40 oder umgekehrt ist. Alternativ kann die Regel- und Steuereinheit 34 ein von dem Rechner 40 getrenntes Bauteil sein, das mit dem Rechner 40 jedoch wirkverbunden ist. Auch hier kann die Wirkverbindung drahtgebunden oder drahtlos sein. Der Rechner 40 dient zur Datenauswertung von Sensorsignalen der Sensorik 39 und zur Weitergabe von Steuersignalen an die Regel- und Steuereinheit 34 und damit auch an die Antriebseinheit 30.

Mit Hilfe der Sensorik 39 kann beispielsweise eine Bewegung oder Verkippung des Fahrzeugs 1 um die x-Richtung x, die y-Richtung y und/oder um die z-Richtung z erfasst werden. Die Bewegung oder Verkippung des Fahrzeugs 1 kann eine kombinierte Roll-, Gier- und/oder Nickbewegung sein. Die Sensorik 39 zur Überschlagsdetektion kann außerdem auch für weitere Komponenten des Fahrzeugs 1 genutzt werden, welche spezifische Lageinformationen des Fahrzeugs 1 benötigen. Dies betrifft beispielsweise die Waffensensorik der Bewaffnung 16.

Unter einem "Überschlag" ist vorliegend insbesondere zu verstehen, dass sich das Fahrzeug 1 zumindest auf das Dach 5 oder auf die Vorderwand 6 dreht. Dies schließt jedoch nicht aus, dass sich das Fahrzeug 1 bei einem Überschlag auch zumindest einmal vollständig, das heißt um 360°, oder auch mehrfach um die x-Richtung x, die y-Richtung y und/oder die z-Richtung z dreht.

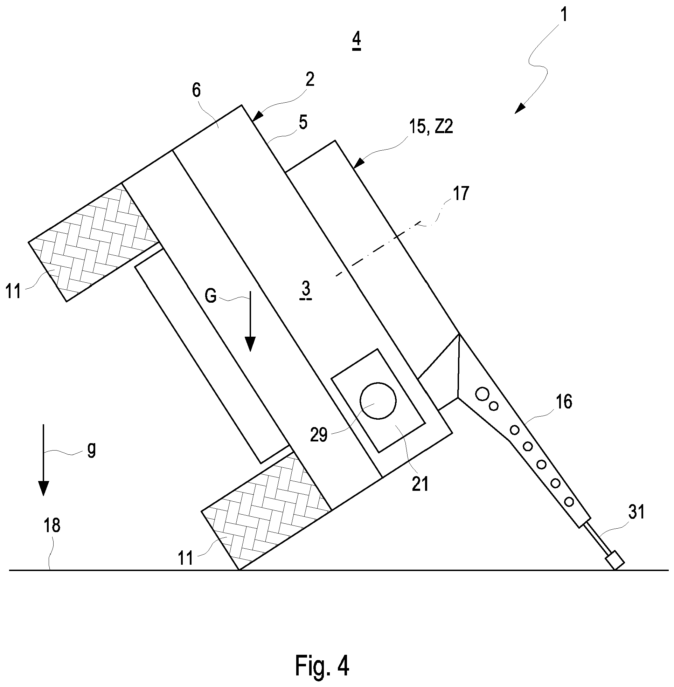

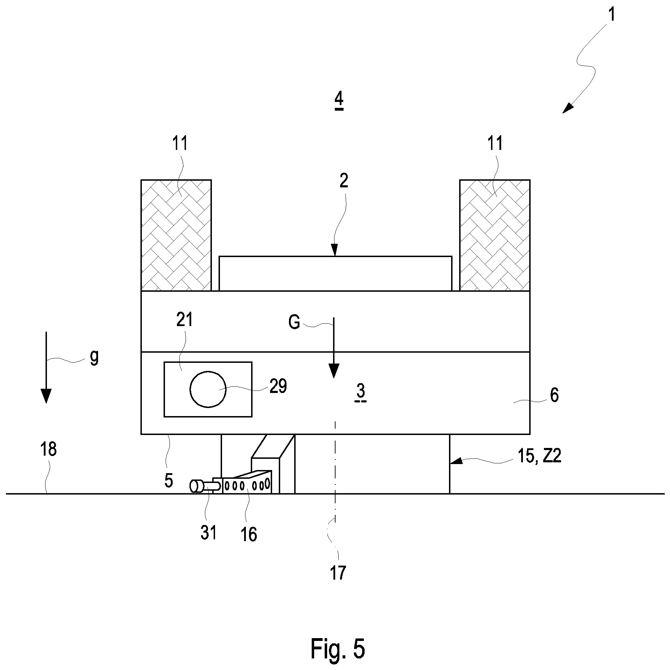

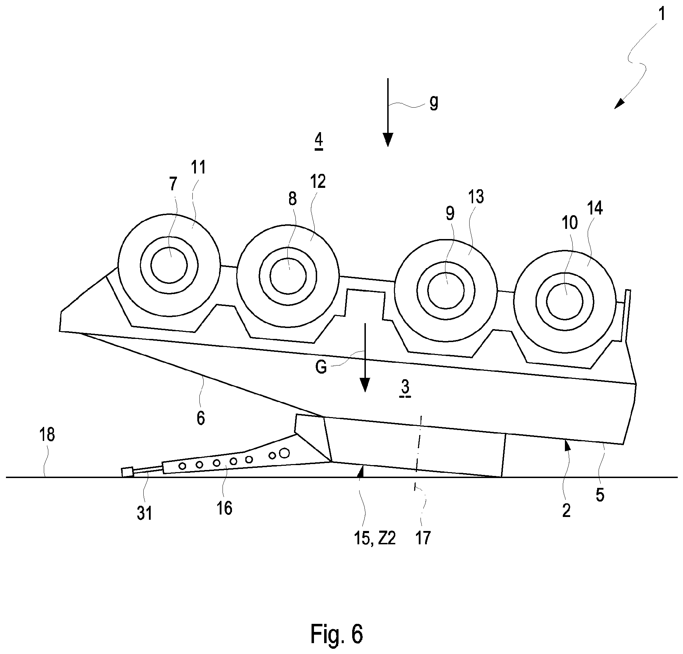

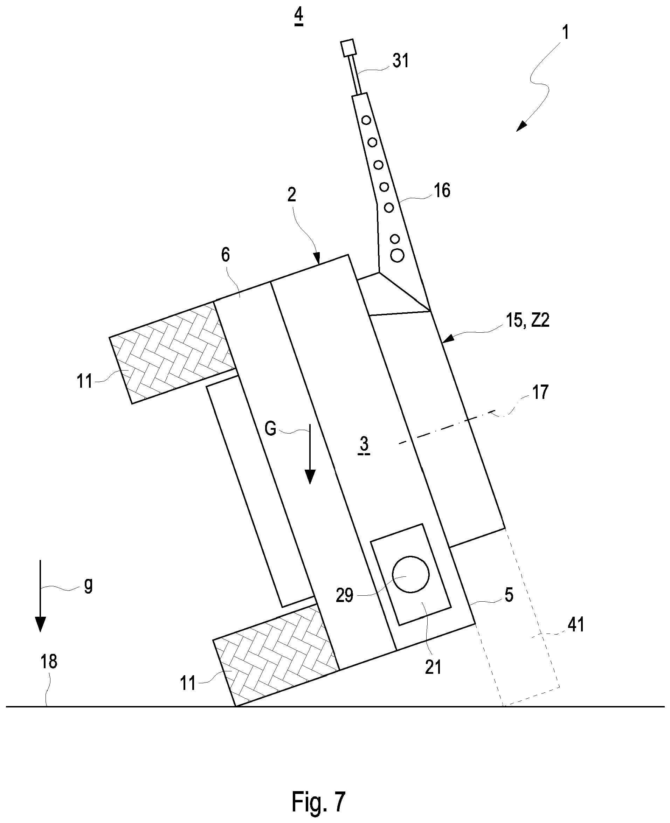

Die Fig. 4 zeigt eine schematische Vorderansicht des Fahrzeugs 1. Die Fig. 5 zeigt eine weitere schematische Vorderansicht des Fahrzeugs 1. Die Fig. 6 zeigt eine weitere schematische Seitenansicht des Fahrzeugs 1. Die Fig. 7 zeigt eine weitere schematische Vorderansicht des Fahrzeugs 1. Im Folgenden wird auf die Fig. 4 bis 7 gleichzeitig Bezug genommen.

Die Funktionalität des Überrollschutzsystem 19 wird nachfolgend anhand der Fig. 1 und 3 bis 7 erläutert. Wie beispielsweise die Fig. 4 zeigt, kippt das Fahrzeug 1 in der Orientierung der Fig. 4 nach rechts und droht sich zu überschlagen. Das Kippen des Fahrzeugs 1 kann zum Beispiel durch ein sich in der Umgebung 4 befindliches Hindernis, wie beispielsweise einen großen Stein oder einen Baumstamm, durch einen Zusammenstoß mit einem anderen Fahrzeug, eine Ansprengung des Fahrzeugs 1, beispielsweise mit Hilfe einer Mine, oder dergleichen ausgelöst werden. Ferner kann das Fahrzeug 1 auch dadurch kippen, dass der Untergrund 18 eine so große Neigung aufweist, dass das Fahrzeug 1 umkippt.

Wird ein bestimmter voreingestellter Grenzwert der Verkippung überschritten, so dass zu erwarten ist, dass sich das Fahrzeug 1 überschlägt, so gibt der Rechner 40 an die Regel- und Steuereinheit 34 ein geeignetes Signal aus, so dass die Regel- und Steuereinheit 34 die Antriebseinheit 30 ansteuert, um den Turm 15 um die Drehachse 17 und/oder das Waffenrohr 31 um die Elevationsachse 32 zu verschwenken, so dass der Turm 15 und insbesondere dessen Bewaffnung 16 von einem in den Fig. 1 und 3 gezeigten Ausgangszustand Z1 in einen in den Fig. 4 bis 7 gezeigten Schutzzustand Z2 verbracht wird. Der Rechner 40 kann somit die Bewaffnung 16 mittelbar über die Regel- und Steuereinheit 34 ansteuern. Alternativ kann auch eine direkte Wirkverbindung zwischen dem Rechner 40 und dem Turm 15 oder der Bewaffnung 16 vorgesehen sein.

Der Ausgangszustand Z1 kann ein Gefechtszustand des Turms 15 sein. Unter einem "Gefechtszustand" ist vorliegend ein von dem Schutzzustand Z2 abweichender Zustand zu verstehen, in dem der Turm 15 ein Ziel erfassen, halten und bekämpfen kann. Für den Fall, dass der Ausgangszustand Z1 ein wie zuvor erwähnter Gefechtszustand ist, können die Begriffe "Ausgangszustand" und "Gefechtszustand" beliebig gegeneinander getauscht werden.

Außerdem kann der Ausgangszustand Z1 auch ein Transportzustand des Turms 15 sein. Unter einem "Transportzustand" ist vorliegend ein von dem Schutzzustand Z2 abweichender Zustand zu verstehen, in dem das Fahrzeug 1, beispielsweise auf einem Tieflader, transportiert wird. Der Turm 15 wird dann zum Transportieren des Fahrzeugs 1 in den Ausgangszustand Z1 verbracht. Für den Fall, dass der Ausgangszustand Z1 ein wie zuvor erwähnter Transportzustand ist, können die Begriffe "Ausgangszustand" und "Transportzustand" beliebig gegeneinander getauscht werden.

Ferner kann der Ausgangszustand Z1 auch ein Fahrzustand des Turms 15 sein. Unter einem "Fahrzustand" ist vorliegend ein von dem Schutzzustand Z2 abweichender Zustand zu verstehen, in dem das Fahrzeug 1 fährt, jedoch kein Ziel erfasst und/oder bekämpft. Der Turm 15 wird dann zum Fahren des Fahrzeugs 1 in den Ausgangszustand Z1 verbracht. Für den Fall, dass der Ausgangszustand Z1 ein wie zuvor erwähnter Fahrzustand ist, können die Begriffe "Ausgangszustand" und "Fahrzustand" beliebig gegeneinander getauscht werden.

Zusammenfassend ist der Ausgangszustand Z1 ein von dem Schutzzustand Z2 abweichender Zustand des Turms 15. Beispielsweise kann der Ausgangszustand Z1 ein wie zuvor erwähnter Gefechtszustand, ein Transportzustand, ein Fahrzustand und/oder ein beliebiger anderer Zustand des Turms 15 sein. Somit fallen unter den Begriff "Ausgangszustand" beispielsweise die Begriffe "Gefechtszustand", "Transportzustand" und/oder "Fahrzustand".

In dem Ausgangszustand Z1 des Turms 15 kann, für den beispielhaften Fall, dass der Ausgangszustand Z1 der Gefechtszustand ist, mit Hilfe der Bewaffnung 16 ein Ziel anvisiert und bekämpft werden. In dem Schutzzustand Z2 hingegen wird der Turm 15 und insbesondere dessen Bewaffnung 16 gegenüber dem Ausgangszustand Z1 derart verschwenkt, dass sich das Fahrzeug 1 mit Hilfe der Bewaffnung 16, insbesondere mit Hilfe des Waffenrohrs 31, auf dem Untergrund 18 abstützt, so dass ein Überschlag des Fahrzeugs 1 verhindert oder zumindest verzögert wird. Das Besatzungsmitglied 29 erhält dadurch genug Zeit, um sich vollständig in den Innenraum 3 des Fahrzeugs 1 oder der Fahrzeugzelle 2 zurückzuziehen. Schwere Verletzungen des Besatzungsmitglieds 29 werden dadurch verhindert. In dem Schutzzustand Z2 des Turms 15 ist die Bekämpfung eines Ziels nicht mehr möglich oder nicht erwünscht.

Der Schutzzustand Z2 unterscheidet sich somit dadurch von dem Ausgangszustand Z1, dass sich das Fahrzeug 1 in dem Schutzzustand Z2 mit Hilfe des Turms 15 und/oder der Bewaffnung 16 auf dem Untergrund 18 abstützen kann, was in dem Ausgangszustand Z1 nicht möglich oder zumindest nicht erwünscht ist. Wie zuvor erwähnt, kann der Ausgangszustand Z1 jeder beliebige Zustand des Turms 15, wie beispielsweise der Gefechtszustand, der Transportzustand, der Fahrzustand oder ein beliebiger anderer Zustand sein, der nicht mit dem Schutzzustand Z2 übereinstimmt.

Für den Fall, dass sich das Fahrzeug 1 dennoch vollständig überschlägt und, wie in den Fig. 5 und 6 gezeigt, mit den Rädern 11, 12, 13, 14 nach oben zum Liegen kommt, dient der Turm 15, insbesondere die Bewaffnung 16, in dem Schutzzustand Z2 als Überrollkäfig. So wird die Lukenöffnung 21 geschützt und das Fahrzeug 1 kommt nicht mit der die Lukenöffnung 21 aufweisenden Wandung 20, die beispielsweise Teil der Vorderwand 6 sein kann, auf dem Untergrund 18 auf. Das Waffenrohr 31 positioniert sich insbesondere in der Nähe des Kopfs des Besatzungsmitglieds 29, um den Kopf von dem Untergrund 18 zu beabstanden.

Wie die Fig. 7 zeigt, kann sich das Fahrzeug 1 in dem Schutzzustand Z2 nicht nur auf der Bewaffnung 16, sondern auch mit dem Turm 15 direkt auf dem Untergrund 18 abstützen um einen Überschlag des Fahrzeugs 1 zu verhindern. Dies ist jedoch nur möglich, wenn der Turm 15 mit einem in der Fig. 7 nur mit gestrichelten Linien dargestellten Überhang 41 seitlich über die Fahrzeugzelle 2 herausragt. Das Fahrzeug 1 stützt sich dann mit Hilfe des Überhangs 41 auf dem Untergrund 18 ab, um einen Überschlag des Fahrzeugs 1 zu verhindern oder zu verzögern.

Die in der Fig. 7 gezeigte Abstützmöglichkeit ergibt sich insbesondere dann, wenn das Fahrzeug 1 ein Kampfpanzer ist. In diesem Fall kann die Bewaffnung 16 beispielsweise eine Glattrohrkanone sein. Der Überhang 41 ist der Bewaffnung 16 abgewandt an dem Turm 15 vorgesehen. In dem Überhang 41 kann beispielsweise ein Ladeautomat der Bewaffnung 16 untergebracht sein. Bei einem Schützenpanzer wäre ein derartiger Überhang 41 eher ungewöhnlich, jedoch ebenfalls einsetzbar.

Das Überrollschutzsystem 19 wird somit mit Hilfe schon installierter Ausrüstung des Fahrzeugs 1, insbesondere des Turms 15 oder der Bewaffnung 16, gewährleistet. Hierbei wird in einem Doppelfunktionsansatz der schon vorhandene Turm 15, insbesondere dessen Bewaffnung 16, als Abstützung zum Abstützen des Fahrzeugs 1 auf dem Untergrund 18 genutzt. Der Turm 15, insbesondere die Bewaffnung 16, insbesondere das Waffenrohr 31, wird bei einem drohenden Überschlag des Fahrzeugs 1 derart von dem Ausgangszustand Z1 in den Schutzzustand Z2 verbracht, dass die Bewaffnung 16 oder der Turm 15, insbesondere dessen Überhang 41, eine Abstützung des Fahrzeugs 1 darstellt. Die Bewaffnung 16 oder der Turm 15 dient dann als Ausleger und stützt damit das Fahrzeug 1 in dem Schutzzustand Z2 ab.

Vorteilhafterweise wird zur Umsetzung des Überrollschutzsystems 19 nur die Sensorik 39 und die Regel- und Steuereinheit 34 benötigt. Die Regel- und Steuereinheit 34 kann als computerimplementierte Software in dem Rechner 40 integriert werden oder als eigenständiges Modul ausgestaltet sein. Die zusätzlich benötigte Hardware zum Verwirklichen des Überrollschutzsystems 19 ist daher auf ein Minimum reduziert. Dies sorgt für eine Kosten- und Gewichtsoptimierung.

Durch die Drehmöglichkeit der Bewaffnung 16 kann mit nur einer Abstützung ein Schwenkwinkel von 360° abgedeckt werden. Hierdurch werden separate Abstützungen an Seiten des Fahrzeugs 1 obsolet. Die Bewaffnung 16 kann im Falle eines Überschlags des Fahrzeugs 1 beschädigt werden. Es kann daher erforderlich sein, dass die Bewaffnung 16 nach einem Überschlag des Fahrzeugs 1 auszutauschen ist. Ferner kann auch das gesamte Fahrzeug 1 verlustig gehen. Dennoch erfüllt die Bewaffnung 16 die zuvor erläuterte Doppelfunktion und das Besatzungsmitglied 29 kann gerettet werden.

Die Schwerkraft sorgt dafür, dass sich das schwere Waffenrohr 31 Richtung des Untergrunds 18 drehen möchte. Dies ist die Richtung, in welche die Bewaffnung 16 in einer Endposition des Fahrzeugs 1 nach einem Überschlag ohnehin weisen soll. Dies erhöht eine Reaktionsgeschwindigkeit, mit welcher das Überrollschutzsystem 19 reagieren kann.

Vorliegend wird somit im Falle eines Überschlags des Fahrzeugs 1 das Fahrzeug 1 abgestützt und so ein Überschlag desselben entweder verzögert oder vollständig verhindert. Die in oder an dem Fahrzeug 1 installierte Sensorik 39 detektiert einen drohenden Überschlag. Hierbei wird von der Sensorik 39 nicht nur detektiert, dass ein Überschlag droht, sondern auch in welche Richtung sich das Fahrzeug 1 zu überschlagen droht.

Folgende Daten oder Fahrzeugparameter können dabei beispielsweise von der Sensorik 39 ermittelt werden. Droht ein Überschlag des Fahrzeugs 1 oder nicht (ja/nein). Befindet sich das Fahrzeug 1 in einem Gefechtsmodus oder die Bewaffnung 16 in dem Ausgangszustand Z1 (ja/nein), der in diesem Fall der Gefechtszustand sein kann. Ferner wird eine Richtung und/oder eine Geschwindigkeit eines möglichen Überschlags des Fahrzeugs 1 erfasst. Auch eine aktuelle Position der Bewaffnung 16, insbesondere des Waffenrohrs 31, kann ermittelt werden. Diese Daten dienen als Input der Regel- und Steuereinheit 34 und/oder des Rechners 40 für das Überschlagschutzsystem 19 und werden in oder von diesen verarbeitet.

Der Rechner 40 erstellt eine Prognose einer zu erwartenden Überschlagsrichtung und/oder einer zu erwartenden Überschlagsgeschwindigkeit und/oder -zeit. Basierend auf diesen Daten erteilt der Rechner 40 einen Befehl für eine bestimmte Drehung und Neigung der Bewaffnung 16 um die Drehachse 17 und/oder die Elevationsachse 32 an die Regel- und Steuereinheit 34, wobei die Regel- und Steuereinheit 34, wie zuvor erwähnt, Teil des Rechners 40 sein kann. Hierdurch wird der Turm 15, insbesondere die Bewaffnung 16, entsprechend in den Schutzzustand Z2 verbracht, sodass ein Überschlag des Fahrzeugs 1 entweder verzögert oder verhindert wird.

Die Verzögerung eines Überschlags des Fahrzeugs 1 kann dem Besatzungsmitglied 29 entweder die Möglichkeit bieten, sich in dem Innenraum 3 in Sicherheit zu bringen oder andere Schutzsysteme können dadurch beispielsweise kleiner, leichter oder langsamer ausgelegt werden. Dies führt zu einer Kosten- und Gewichtsreduktion.

In dem Ausgangszustand Z1 kann das Überrollschutzsystem 19 auch deaktiviert sein, so dass die Bewaffnung 16 im Zweifel ein Ziel weiterverfolgt und der Schutzzustand Z2 nicht ausgelöst wird, wodurch die Bewaffnung 16 von ihrem anvisierten Ziel wegbewegt werden würde. Beispielsweise kann ein von dem Besatzungsmitglied 29 zu betätigender Schalter vorgesehen sein, um das Überrollschutzsystem 19 wahlweise zu aktivieren und zu deaktivieren.

### BEZUGSZEICHENLISTE

- 1: Fahrzeug
- 2: Fahrzeugzelle
- 3: Innenraum
- 4: Umgebung
- 5: Dach
- 6: Vorderwand
- 7: Radachse
- 8: Radachse
- 9: Radachse
- 10: Radachse
- 11: Rad
- 12: Rad
- 13: Rad
- 14: Rad
- 15: Turm
- 16: Bewaffnung
- 17: Drehachse
- 18: Untergrund
- 19: Überrollschutzsystem
- 20: Wandung
- 21: Lukenöffnung
- 22: Lukendeckel
- 23: Drehachse
- 24: Scharnier
- 25: Scharnier
- 26: Verriegelungseinheit
- 27: Außenseite
- 28: Innenseite
- 29: Besatzungsmitglied
- 30: Antriebseinheit
- 31: Waffenrohr
- 32: Elevationsachse
- 33: Doppelpfeil
- 34: Regel- und Steuereinheit
- 35: Tragelement
- 36: Doppelpfeil
- 37: Verstelleinheit
- 38: Aufhängung
- 39: Sensorik
- 40: Rechner
- 41: Überhang

- F: Fahrtrichtung
- g: Schwerkraftrichtung
- G: Gewichtskraft
- x: x-Richtung
- y: y-Richtung
- z: z-Richtung
- Z1: Ausgangszustand
- Z2: Schutzzustand

## Patentansprüche

1. Geschütztes Fahrzeug (1) mit zumindest einem Überrollschutzsystem (19), wobei das Überrollschutzsystem (19) aufweist:
einen Turm (15), der eine Bewaffnung (16) trägt,
eine Sensorik (39), die dazu eingerichtet ist, eine Verkippung des geschützten Fahrzeugs (1) um zumindest eine Raumrichtung (x, y, z) zu erfassen, **gekennzeichnet durch**
eine Regel- und Steuereinheit (34), die dazu eingerichtet ist, den Turm (15) basierend auf Sensorsignalen der Sensorik (39) unmittelbar vor oder bei einem Überschlag des geschützten Fahrzeugs (1) von einem Ausgangszustand (Z1) in einen Schutzzustand (Z2) zu verbringen,
wobei der Turm (15) dazu eingerichtet ist, sich in dem Schutzzustand (Z2) auf einem Untergrund (18), auf dem sich das geschützte Fahrzeug (1) fortbewegt, abzustützen, so dass ein Besatzungsmitglied (29), das sich teilweise innerhalb und teilweise außerhalb des geschützten Fahrzeugs (1) aufhält, während des Überschlags des geschützten Fahrzeugs (1) geschützt ist.

2. Geschütztes Fahrzeug nach Anspruch 1,
**dadurch gekennzeichnet,**
**dass** der Turm (15) dazu eingerichtet ist, sich in dem Schutzzustand (Z2) mit Hilfe der Bewaffnung (16) auf dem Untergrund (18) abzustützen.

3. Geschütztes Fahrzeug nach Anspruch 1 oder 2,
**dadurch gekennzeichnet,**
**dass** der Turm (15) dazu eingerichtet ist, sich in dem Schutzzustand (Z2) mit Hilfe eines Überhangs (41) des Turms (15) auf dem Untergrund (18) abzustützen.

4. Geschütztes Fahrzeug nach Anspruch 2,
**dadurch gekennzeichnet,**
**dass** die Bewaffnung (16) ein Waffenrohr (31) aufweist, wobei die Bewaffnung (16) dazu eingerichtet ist, sich in dem Schutzzustand (Z2) mit dem Waffenrohr (31) auf dem Untergrund (18) abzustützen.

5. Geschütztes Fahrzeug nach Anspruch 4,
**dadurch gekennzeichnet,**
**dass** das sich das Waffenrohr (31) bei dem Verbringen des Turms (15) von dem Ausgangszustand (Z1) in den Schutzzustand (Z2) über das Besatzungsmitglied (29) bewegt.

6. Geschütztes Fahrzeug nach einem der Ansprüche 1 - 5,
**gekennzeichnet durch**
eine Antriebseinheit (30) zum Antreiben des Turms (15), wobei die Antriebseinheit (30) zum Verbringen des Turms (15) aus dem Ausgangszustand (Z1) in den Schutzzustand (Z2) dazu eingerichtet ist, den Turm (15) um eine Drehachse (17) zu drehen und/oder die Bewaffnung (16) um eine Elevationsachse (32) zu schwenken.

7. Geschütztes Fahrzeug nach Anspruch 6,
**gekennzeichnet durch**
einen Rechner (40), wobei der Rechner (40) der Regel- und Steuereinheit (34) basierend auf den Sensorsignalen der Sensorik (39) Informationen zum Ansteuern der Antriebseinheit (30) bereitstellt.

8. Geschütztes Fahrzeugnach Anspruch 7,
**dadurch gekennzeichnet,**
**dass** der Rechner (40) dazu eingerichtet ist, eine Priorisierung zwischen dem Ausgangszustand (Z1) und dem Schutzzustand (Z2) derart vorzunehmen, dass der Turm (15) trotz eines drohenden Überschlags des geschützten Fahrzeugs (1) in dem Ausgangszustand (Z1) verbleibt.

9. Geschütztes Fahrzeugnach Anspruch 7 oder 8,
**dadurch gekennzeichnet,**
**dass** die Regel- und Steuereinheit (34) in den Rechner (40) integriert ist.

10. Geschütztes Fahrzeugnach einem der Ansprüche 7 - 9,
**dadurch gekennzeichnet,**
**dass** die Sensorik (39) und/oder Rechner (40) dazu eingerichtet sind, zu ermitteln, ob ein Überschlag des geschützten Fahrzeugs (1) droht oder nicht, ob sich das geschützte Fahrzeug (1) in einem Gefechtsmodus befindet oder nicht, in welche Raumrichtung (x, y, z) ein Überschlag des geschützten Fahrzeugs (1) droht, mit welcher Geschwindigkeit ein Überschlag des geschützten Fahrzeugs (1) erfolgen wird, und/oder in welcher Position sich die Bewaffnung (16) befindet.

11. Geschütztes Fahrzeugnach einem der Ansprüche 7 - 10,
**dadurch gekennzeichnet,**
**dass** der Rechner (40) dazu eingerichtet ist, eine Prognose hinsichtlich einer zu erwartenden Überschlagsrichtung, einer zu erwartenden Überschlagsgeschwindigkeit und/oder einer zu erwartenden Überschlagszeit zu erstellen.

12. Geschütztes Fahrzeug nach einem der Ansprüche 1 - 11,
**gekennzeichnet durch**
eine geschützte Fahrzeugzelle (2), an welcher der Turm (15) drehbar gelagert ist.

13. Geschütztes Fahrzeug nach Anspruch 12,
**dadurch gekennzeichnet,**
**dass** sich der Turm (15) und die geschützte Fahrzeugzelle (2) in dem Schutzzustand (Z2) gemeinsam auf dem Untergrund (18) abstützen.

14. Geschütztes Fahrzeug nach Anspruch 12 oder 13,
**dadurch gekennzeichnet,**
**dass** die geschützte Fahrzeugzelle (2) eine Lukenöffnung (21) aufweist, wobei sich ein Waffenrohr (31) der Bewaffnung (16) bei dem Verbringen des Turms (15) von dem Ausgangszustand (Z1) in den Schutzzustand (Z2) über die Lukenöffnung (21) bewegt.

## Claims

1. Protected vehicle (1) comprising at least one rollover protection system (19), the rollover protection system (19) comprising:
a turret (15) carrying a weapon (16),
a sensor technology (39) configured to detect a tilting of the protected vehicle (1) about at least one spatial direction (x, y, z),
**characterized by**
a controlling and steering unit (34) configured to transfer the turret (15) from an initial state (Z1) to a protected state (Z2) based on sensor signals from the sensor technology (39) immediately before or during a rollover of the protected vehicle (1),
wherein the turret (15) is configured to support itself in the protected state (Z2) on a subsoil (18) on which the protected vehicle (1) travels, so that a crew member (29) being located partially inside and partially outside the protected vehicle (1) is protected during the rollover of the protected vehicle (1).

2. Protected vehicle according to claim 1,
**characterized in that**
the turret (15) is configured to support itself on the subsoil (18) in the protected state (Z2) with the aid of the weapon (16).

3. Protected vehicle according to claim 1 or 2,
**characterized in that**
the turret (15) is configured to support itself on the subsoil (18) in the protected state (Z2) with the aid of an overhang (41) of the turret (15).

4. Protected vehicle according to claim 2,
**characterized in that**
the weapon (16) comprises a weapon barrel (31), wherein the weapon (16) is configured to support itself on the subsoil (18) in the protected state (Z2) by the weapon barrel (31).

5. Protected vehicle according to claim 4,
**characterized in that**
the weapon barrel (31) moves over the crew member (29) when the turret (15) is transferred from the initial state (Z1) to the protected state (Z2).

6. Protected vehicle according to any one of claims 1 - 5,
**characterized by**
a drive unit (30) for driving the turret (15), wherein the drive unit (30) for transferring the turret (15) from the initial state (Z1) to the protected state (Z2) is configured to rotate the turret (15) about an axis of rotation (17) and/or to pivot the weapon (16) about an axis of elevation (32).

7. Protected vehicle according to claim 6,
**characterized by**
a computer (40), wherein the computer (40) provides the controlling and steering unit (34) with information for controlling the drive unit (30) based on the sensor signals of the sensor technology (39).

8. Protected vehicle according to claim 7,
**characterized in that**
the computer (40) is configured to prioritize between the initial state (Z1) and the protected state (Z2) in such a way that the turret (15) remains in the initial state (Z1) despite an imminent rollover of the protected vehicle (1).

9. Protected vehicle according to claim 7 or 8,
**characterized in that**
**in that** the controlling and steering unit (34) is integrated into the computer (40).

10. Protected vehicle according to any one of claims 7 - 9,
**characterized in that**
the sensor technology (39) and/or the computer (40) are configured to determine whether or not the protected vehicle (1) is in danger of rolling over, whether or not the protected vehicle (1) is in a combat mode, in which spatial direction (x, y, z) the protected vehicle (1) is in danger of rolling over, at what speed the protected vehicle (1) will roll over and/or in which position the weapon (16) is located.

11. Protected vehicle according to any one of claims 7 - 10,
**characterized in that**
the computer (40) is configured to generate a forecast with regard to an expected rollover direction, an expected rollover speed and/or an expected rollover time.

12. Protected vehicle according to any one of claims 1 - 11,
**characterized by**
a protected vehicle cell (2) on which the turret (15) is rotatably mounted.

13. Protected vehicle according to claim 12,
**characterized in that**
the turret (15) and the protected vehicle cell (2) support itself together on the subsoil (18) in the protected state (Z2).

14. Protected vehicle according to claim 12 or 13,
**characterized in that**
the protected vehicle cell (2) comprises a hatch opening (21), wherein a weapon barrel (31) of the weapon (16) moves over the hatch opening (21) when the turret (15) is transferred from the initial state (Z1) to the protected state (Z2).

## Revendications

1. Véhicule protégé (1) comprenant au moins un système de protection contre le renversement (19), le système de protection contre le renversement (19) comprenant :
une tourelle (15) portant une arme (16),
une technologie de capteurs (39) configurée pour détecter une inclinaison du véhicule protégé (1) autour d'au moins une direction spatiale (x, y, z),
**caractérisé par**
une unité de commande et de direction (34) configurée pour faire passer la tourelle (15) d'un état initial (Z1) à un état protégé (Z2) sur la base de signaux de capteurs provenant de la technologie des capteurs (39) immédiatement avant ou pendant un renversement du véhicule protégé (1),
dans lequel la tourelle (15) est configurée pour se soutenir elle-même dans l'état protégé (Z2) sur un sous-sol (18) sur lequel le véhicule protégé (1) se déplace, de sorte qu'un membre d'équipage (29) se trouvant partiellement à l'intérieur et partiellement à l'extérieur du véhicule protégé (1) est protégé pendant le renversement du véhicule protégé (1).

2. Véhicule protégé selon la revendication 1,
**caractérisé par le fait que**
la tourelle (15) est configurée pour s'appuyer sur le sous-sol (18) dans l'état protégé (Z2) à l'aide de l'arme (16).

3. Véhicule protégé selon la revendication 1 ou 2,
**caractérisé en ce que**
la tourelle (15) est configurée pour s'appuyer sur le sous-sol (18) dans l'état protégé (Z2) à l'aide d'un porte-à-faux (41) de la tourelle (15).

4. Véhicule protégé selon la revendication 2,
**caractérisé par le fait que**
l'arme (16) comprend un canon (31), dans lequel l'arme (16) est conçue pour s'appuyer sur le sous-sol (18) dans l'état protégé (Z2) par le canon (31).

5. Véhicule protégé selon la revendication 4,
**caractérisé par le fait que**
le canon (31) se déplace au-dessus du membre de l'équipage (29) lorsque la tourelle (15) passe de l'état initial (Z1) à l'état protégé (Z2).

6. Véhicule protégé selon l'une des revendications 1 à 5,
**caractérisé par**
une unité d'entraînement (30) pour entraîner la tourelle (15), dans laquelle l'unité d'entraînement (30) pour faire passer la tourelle (15) de l'état initial (Z1) à l'état protégé (Z2) est conçue pour faire tourner la tourelle (15) autour d'un axe de rotation (17) et/ou pour faire pivoter l'arme (16) autour d'un axe d'élévation (32).

7. Véhicule protégé selon la revendication 6,
**caractérisé par**
un ordinateur (40), dans lequel l'ordinateur (40) fournit à l'unité de commande et de direction (34) des informations pour commander l'unité d'entraînement (30) sur la base des signaux des capteurs de la technologie des capteurs (39).

8. Véhicule protégé selon la revendication 7,
**caractérisé en ce que**
l'ordinateur (40) est configuré pour établir une priorité entre l'état initial (Z1) et l'état protégé (Z2) de manière à ce que la tourelle (15) reste dans l'état initial (Z1) malgré un renversement imminent du véhicule protégé (1).

9. Véhicule protégé selon la revendication 7 ou 8,
**caractérisé par le fait que**
l'unité de commande et de direction (34) est intégrée à l'ordinateur (40).

10. Véhicule protégé selon l'une des revendications 7 à 9,
**caractérisé par le fait que**
la technologie des capteurs (39) et/ou l'ordinateur (40) sont configurés pour déterminer si le véhicule protégé (1) risque ou non de se renverser, si le véhicule protégé (1) est en mode de combat, dans quelle direction spatiale (x, y, z) le véhicule protégé (1) risque de se renverser, à quelle vitesse le véhicule protégé (1) va se renverser et/ou dans quelle position se trouve l'arme (16).

11. Véhicule protégé selon l'une des revendications 7 à 10,
**caractérisé par le fait que**
l'ordinateur (40) est configuré pour générer une prévision concernant une direction de renversement prévue, une vitesse de renversement prévue et/ou un temps de renversement prévu.

12. Véhicule protégé selon l'une des revendications 1 à 11,
**caractérisé par**
une cellule de véhicule protégé (2) sur laquelle la tourelle (15) est montée rotative.

13. Véhicule protégé selon la revendication 12,
**caractérisé par le fait que**
la tourelle (15) et la cellule du véhicule protégé (2) se soutiennent ensemble sur le sous-sol (18) dans l'état protégé (Z2).

14. Véhicule protégé selon la revendication 12 ou 13,
**caractérisé par le fait que**
la cellule du véhicule protégé (2) comprend une ouverture de trappe (21), dans laquelle le canon (31) de l'arme (16) se déplace sur l'ouverture de la trappe (21) lorsque la tourelle (15) est transférée de l'état initial (Z1) à l'état protégé (Z2).
